# EUROPEAN PATENT APPLICATION

(11) **EP 2 455 849 A2**
(43) Date of publication of application: **23.05.2012**
(21) Application number: 11189526.4
(22) Date of filing: 17.11.2011
(51) Int. Cl.: G06F 3/048, G06F 1/16

(54) **Apparatus and method for providing electronic book function in portable terminal**

(30) Priority: 18.11.2010 KR 20100114811
(71) Applicant: Samsung Electronics Co., Ltd, Suwon-si, Gyeonggi-do 442-742 (KR)
(72) Inventor: Jung, Dong-Wook, Gyeonggi-do (KR)
(74) Representative: Hutter, Jacobus Johannes

(57) **Abstract**

An apparatus and method for providing an electronic book (e-book) function in a portable terminal are provided. The apparatus includes a controller for loading an e-book, and a scrap processor for applying a specific effect to a partial region of a text of the loaded e-book and, if a user's input to the region to which the specific effect is applied is sensed, for generating the applied effect.

## Description

### BACKGROUND OF THE INVENTION

### 1. Field of the Invention:

The present invention relates to an apparatus and method for an electronic book (e-book) function of a portable terminal. More particularly, the present invention relates to an apparatus and method for, when performing a scrap (scrapbook) process according to an e-book function, applying a special effect to a scrap region and separately managing only scrapped contents in a portable terminal.

### 2. Description of the Related Art:

Portable terminals are rapidly becoming popular owing in part to the convenience of carrying. Accordingly, service providers (i.e., system manufacturers) are competitively developing terminals having more special functions in order to attract many users. For example, the portable terminals are providing various functions of a phone book, a game, a scheduler, a Short Message Service (SMS), an Internet service, an electronic mail (email) service, an alarm clock function, a Motion Picture Experts Group (MPEG)-1 Audio Layer 3 (MP3) player, a digital camera, an electronic dictionary, an e-book, and the like.

Recently, the e-book, an information provision medium replacing a conventional paper book, has been introduced to show text contents in an electronic display manner. The e-book is of a scheme of, after storing text contents in a flash memory or a built-in hard disk, showing the stored text contents through a display screen. The e-book has an advantage of being capable of, after storing a large amount of book stories at a time, selecting and showing a wanted story.

Through the above e-book function, a user may separately scrap and store some stories of a book that he is reading.

In a case where the user is to perform the scrap process, the user sets a region that he would scrap and selects a command of scrapping the region.

A portable terminal sensing the above user's action separately stores and manages only contents (i.e., image data or text data) of a corresponding region, and provides only a simple message indicating that scrap has been completed to the user.

The user of the portable terminal would preferably use an application capable of giving a unique effect. But, because a conventional portable terminal provides only a fixed effect for a digitalized book, the user's dissatisfaction increases.

Accordingly, to address the above problem, there is a need for an apparatus and method for providing an e-book function capable of applying an effect dependent on a user's personal preferences in a portable terminal.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for an electronic book (e-book) function that provides a case-by-case effect in a portable terminal.

Another aspect of the present invention is to provide an apparatus and method for providing a case-by-case effect to a scrap region in a portable terminal.

A further aspect of the present invention is to provide an apparatus and method for, in a case of executing a scrap region to which an effect is applied, scrapping the scrap region according to a preset effect in a portable terminal.

The above aspects are achieved by providing an apparatus and method for providing an e-book function in a portable terminal.

In accordance with an aspect of the present invention, an apparatus for providing an e-book function in a portable terminal is provided. The apparatus includes a controller for loading an e-book, and a scrap processor for applying a specific effect to a partial region (scrap) of a text of the loaded e-book and, if a user' input to the region to which the specific effect is applied is sensed, for generating the applied effect.

In accordance with another aspect of the present invention, an apparatus for providing an e-book function in a portable terminal is provided. The apparatus includes an effect application unit for receiving a selection of a region intended to scrap among a text of an e-book and applying a specific effect to the selected region, a scrap processor for, in a case of receiving a selection of the applied specific effect, generating the applied effect, and a controller for storing data of the selected region.

In accordance with another aspect of the present invention, a method for providing an e-book function in a portable terminal is provided. The method includes loading an e-book, applying a specific effect to a partial region of a text of the loaded e-book, and, if a user's input to the region to which the specific effect is applied is sensed, generating the applied effect.

In accordance with another aspect of the present invention, a method for providing an e-book function in a portable terminal is provided. The method includes receiving a selection of a region intended to scrap among a text of an e-book, applying a specific effect to the selected region, in a case of receiving a selection of the applied specific effect, generating the applied effect, and storing data of the selected region.

The present invention provides a method for providing an electronic book (e-book) function in a portable terminal comprising receiving a selection of a region intended to scrap among a text of an e-book, applying a specific effect to the selected region, in a case of receiving a selection of the applied specific effect, generating the applied effect, and storing data of the selected region.

Preferably, the method further comprises outputting data of the region intended to scrap onto the applied effect wherein the data of the region intended to scrap uses at least one of a capture program and a letter recognition program.

Preferably, the receiving of the selection of the region intended to scrap is performed using at least one of a touch input and blocking.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiments of the present invention will become more apparent from the following description taken in conjunction with the accompanying drawings in which:

FIG. 1 is a block diagram illustrating a construction of a portable terminal for scrapping text contents through an electronic book (e-book) function according to an exemplary embodiment of the present invention;

FIG. 2 is a flowchart illustrating a process of setting an effect to apply to a scrap region in a portable terminal according to an exemplary embodiment of the present invention;

FIG. 3 is a flowchart illustrating a process of scrapping text contents in a portable terminal performing an e-book function according to an exemplary embodiment of the present invention;

FIGs. 4A and 4B are diagrams illustrating a process of setting a scrap region in a portable terminal according to an exemplary embodiment of the present invention;

FIGs. 5A and 5B are diagrams illustrating a process of performing a scrap process in a portable terminal according to an exemplary embodiment of the present invention; and

FIGs. 6A and 6B are diagrams illustrating a scrap effect of a portable terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an apparatus and method for applying a special effect to text contents and enhancing utilization of a portable terminal performing an electronic book (e-book) function.

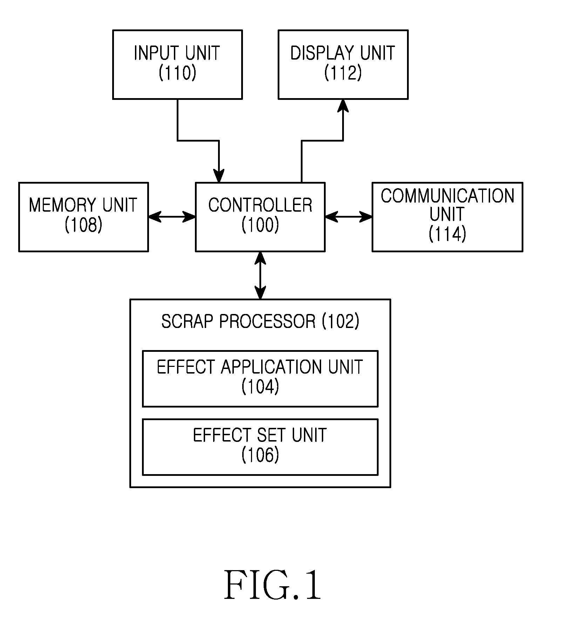

FIGs. 1 through 6, described below, and the various exemplary embodiments of the present invention provided are by way of illustration only and should not be construed in any way that would limit the scope of the present invention. Those skilled in the art will understand that the principles of the present disclosure may be implemented in any suitably arranged communications system. The terms used to describe various exemplary embodiments of the present invention are provided to merely aid the understanding of the description, and their use and definitions in no way limit the scope of the invention. Terms such as 'first', 'second', and the like are used to differentiate between objects having the same terminology and are in no way intended to represent a chronological order, except where explicitly stated otherwise. A set is defined as a non-empty set including at least one element.

FIG. 1 is a block diagram illustrating a construction of a portable terminal for scrapping text contents through an e-book function according to an exemplary embodiment of the present invention.

Referring to FIG. 1, the portable terminal can include a controller 100, a scrap processor 102, a memory unit 108, an input unit 110, a display unit 112, and a communication unit 114. The scrap processor 102 can include an effect application unit 104 and an effect set unit 106. The portable terminal may include additional units that are not illustrated here merely for sake of clarity. Similarly, the functionality of two or more of the above units may be integrated into a single component.

The controller 100 of the portable terminal controls a general operation of the portable terminal. For example, the controller 100 performs processing and control for voice call and data communication. In addition to a general function, according to an exemplary embodiment of the present invention, the controller 100 processes to provide an e-book function, and to apply an effect according to a user's request to the e-book function.

In a case where the controller 100 is to load an e-book file through an e-book application, the controller 100 processes to apply a background effect to a page, a scrap region, and the like. For one example, in a case where the controller 100 is to set a plurality of pages constituting the e-book file to an old paper background, the controller 100 processes to output text contents while changing an existing fixed background of a page into the old paper background.

Also, in a case where the controller 100 is to set a scrap region by a notepad effect, the controller 100 can apply the notepad effect onto the scrap region.

The scrap processor 102 applies a preset specific effect to a scrap region that is a partial region of text contents, under the control of the controller 100. In a case where the scrap processor 102 senses a request for execution of the scrap region to which the effect is applied, the scrap processor 102 generates the preset effect.

The effect application unit 104 of the scrap processor 102 processes to apply a preset effect to a page or a scrap region set by a user. The effect set unit 106 sets an effect to apply to the scrap region in accordance with a user's selection. After outputting a list including, for example, leaf, notepad, paper notebook, old notebook, and waterdrop backgrounds, the effect set unit 106 receives a user selection of an effect that the user would set.

The leaf background is for expressing a scrap region in a form of a leaf and for displaying the contents of the scrap region on the leaf. In a case where a user flicks or touches the leaf, the contents are scrapped together with a leaf flying sound.

The notepad, paper notebook, or old notebook backgrounds are for expressing a scrap region in a form of a notepad or notebook and for displaying the contents of the scrap region on the notepad or notebook such that, in a case where a user tears away the notepad or tears off the notebook, the contents are scrapped together with a corresponding sound.

Further, the waterdrop background is for expressing a scrap region in a form of a waterdrop and for displaying the contents of the scrap region on the waterdrop such that, in a case where a user splashes or spills the waterdrop, the contents are scrapped together with a corresponding sound.

Other scrap region background shapes, appearances, and effects are of course possible, with or without corresponding animation and sounds.

The memory unit 108 includes a Read Only Memory (ROM), a Random Access Memory (RAM), a flash ROM, or other similar storage devices. The ROM stores a microcode of a program for processing and controlling the controller 100 and the scrap processor 102, and a variety of reference data.

The RAM, a working memory of the controller 100, stores temporary data generated in execution of a variety of programs. The flash ROM stores a diversity of updateable depository data such as a phone book, an outgoing message, an incoming message, and the like.

The input unit 110 exemplarily includes numeral key buttons '0' to '9', a menu button, a cancel button, an OK button, a talk button, an end button, an Internet button, navigation key (or direction key) buttons, and a plurality of function keys such as a character input key. The input unit 110 provides key input data corresponding to a key pressed by a user to the controller 100.

The display unit 112 displays state information generated during operation of the portable terminal, characters, a large amount of moving pictures and still pictures and the like. The display unit 112 may be a color Liquid Crystal Display (LCD), an Active Matrix Organic Light Emitting Diode (AMOLED) display, and other similar display apparatuses. In a case where the display unit 112 includes a touch input device and is applied to a portable terminal of a touch input scheme, the display unit 112 can be combined with input unit 110 and used as an input device of the portable terminal.

The communication unit 114 performs a function of transmitting/receiving and processing a wireless signal of data input/output through an antenna (not illustrated). For example, in a transmission mode, the communication unit 114 performs a function of processing original data through channel coding and spreading, converting the original data into a Radio Frequency (RF) signal, and transmitting the RF signal. In a reception mode, the communication unit 114 performs a function of converting a received RF signal into a baseband signal, processing the baseband signal through de-spreading and channel decoding, and restoring the signal to original data.

A function of the scrap processor 102 can be implemented by the controller 100 of the portable terminal. However, these are separately constructed and shown in an exemplary embodiment of the present invention as an exemplary construction only for description convenience, and should not limit the scope of the present invention. It should be understood by those skilled in the art that various modifications of construction can be made within the scope of the present invention. For example, construction may be such that all of these are processed in the controller 100.

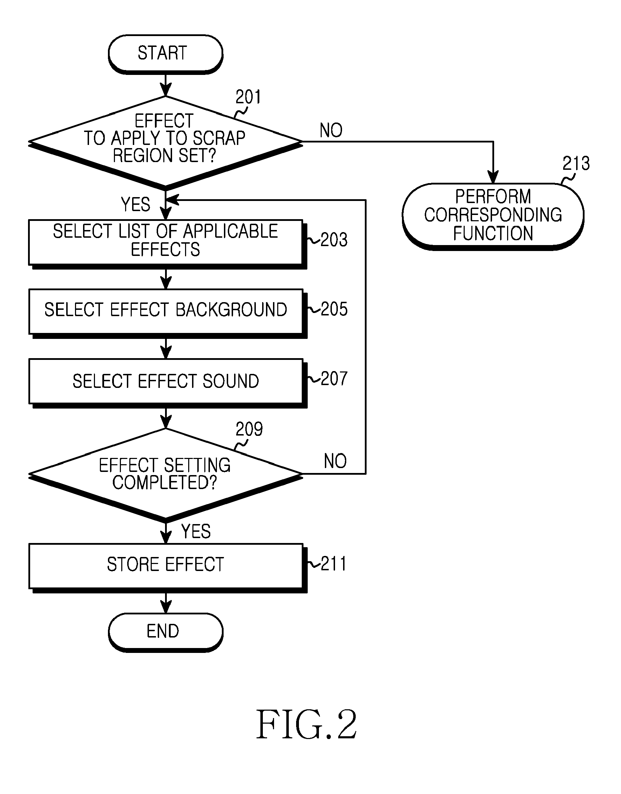

FIG. 2 is a flowchart illustrating a process of setting an effect to apply to a scrap region in a portable terminal according to an exemplary embodiment of the present invention.

Referring to FIG. 2, in step 201, the portable terminal determines whether to set an effect to apply to a scrap region. Here, step 201 is a process of setting an effect to apply to a scrap region in order to express the scrap region that a user would scrap among e-book text contents. For one example, in a case where the user of the portable terminal is to apply a notepad effect to the scrap region through the effect setting process and touch the notepad effect, the portable terminal can store the scrap region while tearing off a notepad.

If it is determined in step 201 that the portable terminal does not set the effect to apply to the scrap region, the portable terminal proceeds to step 213 and performs a corresponding function (e.g., a standby mode).

In contrast, if it is determined in step 201 that the portable terminal sets the effect to apply to the scrap region, the portable terminal proceeds to step 203 and selects a list of applicable effects. Here, the list of applicable effects can be an effect background of a scrap region, an effect sound of the scrap region, and the like.

After that, the portable terminal proceeds to step 205 and receives a selection of the effect background of the scrap region from the user. Next, the portable terminal proceeds to step 207 and receives a selection of the effect sound of the scrap region from the user.

The effect background, which is a background for expressing text contents that a user would scrap, becomes a notepad background, a leaf background, a waterdrop background, a paper notebook background, an old notebook background, and the like. The effect sound, which corresponds to an effect background, becomes a notepad tearing-away sound, a leaf flying sound, a water flowing sound, a paper notebook tearing-off sound, and the like.

Next, the portable terminal proceeds to step 209 and determines if an effect setting by a user is completed.

If it is determined in step 209 that the effect setting is not completed, the portable terminal returns to step 203 and again performs the process of selecting the list of applicable effects.

In contrast, if it is determined in step 209 that the effect setting is completed, the portable terminal proceeds to step 211 and stores, as effect of a scrap region, the effect selected by the user, and then terminates the algorithm according to the exemplary embodiment of the present invention.

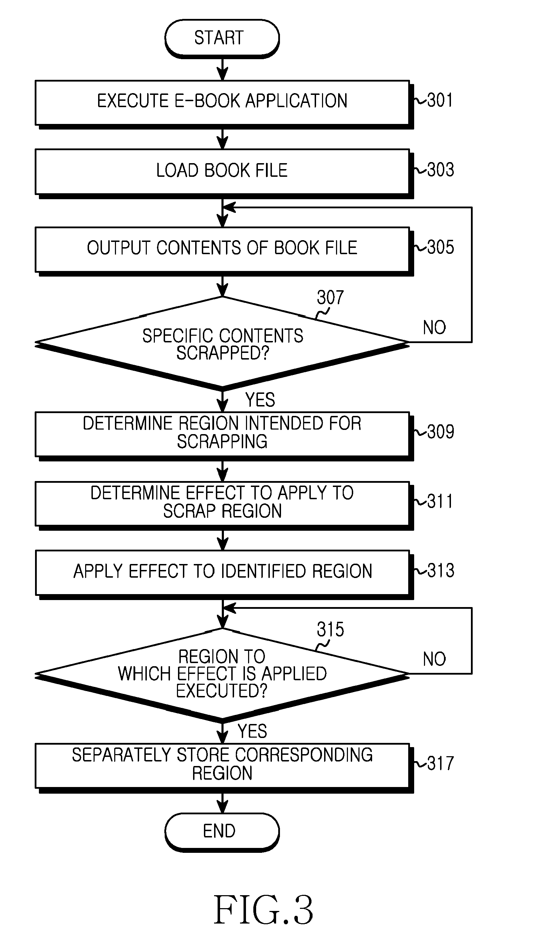

FIG. 3 is a flowchart illustrating a process of scrapping text contents in a portable terminal performing an e-book function according to an exemplary embodiment of the present invention.

Referring to FIG. 3, in step 301, the portable terminal executes an e-book application. After that, the portable terminal proceeds to step 303 and performs a process of selecting and loading an e-book file intended for execution.

After that, the portable terminal proceeds to step 305 and outputs the contents of the e-book file on a display unit, thereby allowing a user to turn a page of the e-book file and to determine the text contents of the e-book file.

Next, the portable terminal proceeds to step 307 and determines if it senses a user's scrap request for scrapping the specific contents (i.e., a specific region (e.g., an image or text selection) of a text) of the e-book file.

If it is determined in step 307 that the portable terminal does not sense the scrap request for the specific contents, the portable terminal again performs the process of step 305.

In contrast, if it is determined in step 307 that the portable terminal senses the scrap request for the specific contents, the portable terminal proceeds to step 309 and determines a region intended for scrapping. At this time, the process of determining the region intended for scrapping includes sensing a user's touch input and determining a corresponding scrap region. A user can set the scrap region through a touch input, for example, if he draws a line. Further, as the user cannot set a large scrap region by a touch input if he draws the line, he can set the large scrap region through blocking. The scrap region includes a text region and an image region.

Next, the portable terminal proceeds to step 311 and determines an effect to apply to the scrap region. This is to determine the effect set by a user to apply to the scrap region in FIG. 2, and can determine an effect background and effect sound of the scrap region.

After that, the portable terminal proceeds to step 313 and applies effect to the region determined in step 309. Next, the portable terminal proceeds to step 315 and determines if a user executes the region to which the effect is applied. Here, executing the region to which the effect is applied means that the user makes a request for scrapping and storing the contents of the set region.

If it is determined in step 315 that the portable terminal does not sense the execution of the region to which the effect is applied, the portable terminal again performs the process of step 315.

In contrast, if it is determined in step 315 that the portable terminal senses the execution of the region to which the effect is applied, the portable terminal proceeds to step 317 and separately stores a corresponding region and completes the scrap process. The portable terminal then terminates the algorithm according to the exemplary embodiment of the present invention.

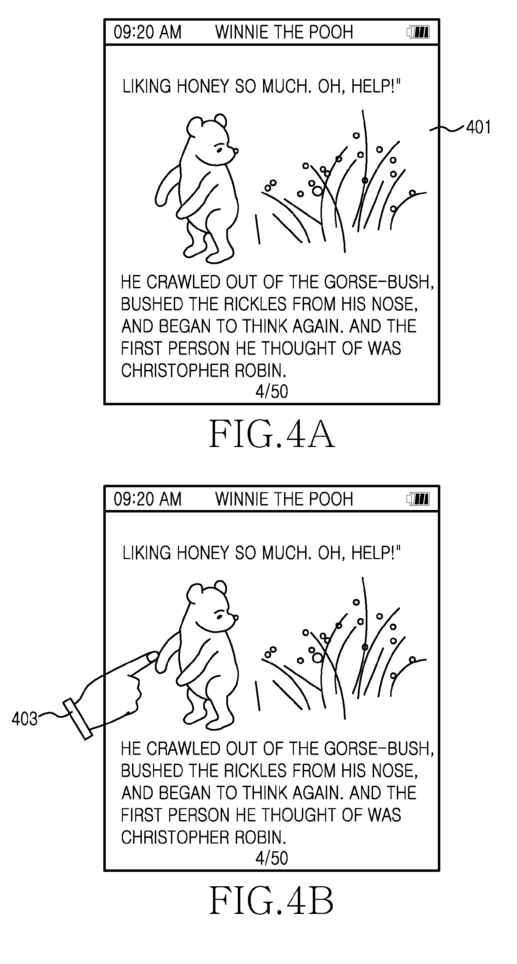

FIGs. 4A-4B are diagrams illustrating a process of setting a scrap region in a portable terminal according to an exemplary embodiment of the present invention.

FIG. 4A is a diagram illustrating a screen performing an e-book function in a portable terminal according to an exemplary embodiment of the present invention.

Referring to FIG. 4A, the portable terminal loads (401) an exemplary English fiction e-book, and a user can turn a page to determine the contents of the corresponding e-book file.

FIG. 4B is a diagram illustrating a screen setting a region for scrapping in the course of performing an e-book function in a portable terminal according to an exemplary embodiment of the present invention.

Referring to FIG. 4B, in a case where a user of the portable terminal is to scrap and store a specific region of e-book file contents, he should set a region including the contents that he would store.

For instance, as illustrated, in a case where the user intends to scrap a bear character, he draws a line around the bear character and sets (403) a scrap region. In another exemplary embodiment, the user of the portable terminal can set a scrap region by drawing a diagonal line and blocking a region including the bear character.

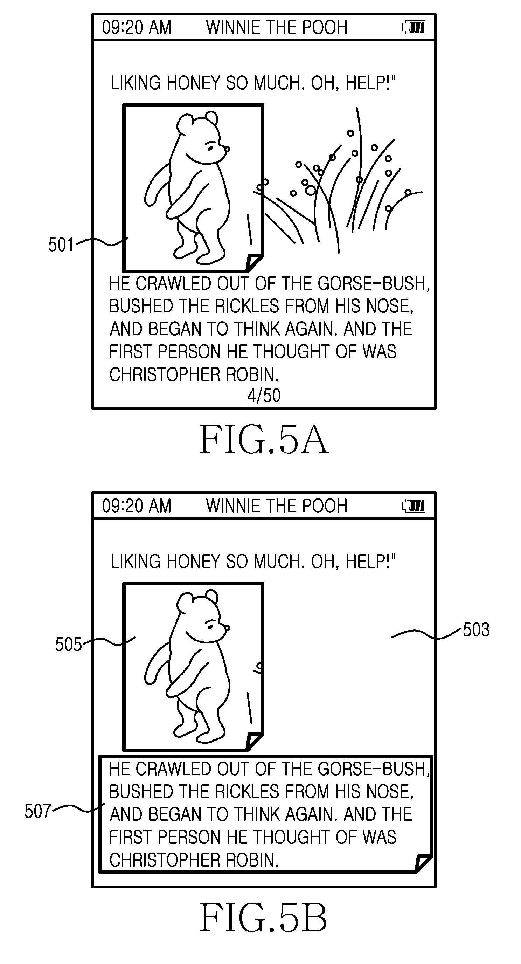

FIGs. 5A-5B are diagrams illustrating a process of performing a scrap process in a portable terminal according to an exemplary embodiment of the present invention.

FIG. 5A is a diagram illustrating a screen applying an effect to a scrap region in a portable terminal according to an exemplary embodiment of the present invention.

Referring to FIG. 5A, in a case where the portable terminal senses a user's input for region setting in the course of performing an e-book function, the portable terminal applies a predefined effect to a corresponding region.

For one example, as illustrated, in a case where the portable terminal senses a user's input of setting a bear character, the portable terminal applies (501) a preset notepad effect around the bear character. At this time, the portable terminal captures text contents to which the notepad effect is applied and outputs the bear character onto the notepad effect. In a case where the notepad effect is applied onto a text, the portable terminal can output the contents of the text onto the notepad effect or output the captured text contents onto the notepad effect using a letter recognition function.

After that, a user of the portable terminal tears away the applied notepad in order to scrap a corresponding region. In a case where the portable terminal senses the above execution, the portable terminal processes to store the image of the bear character of the corresponding region in a separate storage space.

FIG. 5B is a diagram illustrating a screen storing data of a scrap region in a portable terminal according to an exemplary embodiment of the present invention.

Referring to FIG. 5B, as illustrated, the portable terminal is storing (503) data of two scrap regions.

In a description referring to FIG. 5A, a user of the portable terminal scraps a bear character and a text below the bear character. At this time, the portable terminal can store scrap data 505 and 507 in a scrap storage space in a state of applying a preset effect according to an exemplary embodiment of the present invention. In addition, the portable terminal can classify and output scrap data corresponding to an e-book file. For instance, the portable terminal classifies and outputs data scrapped from an e-book file "A" and data scrapped from an e-book file "B".

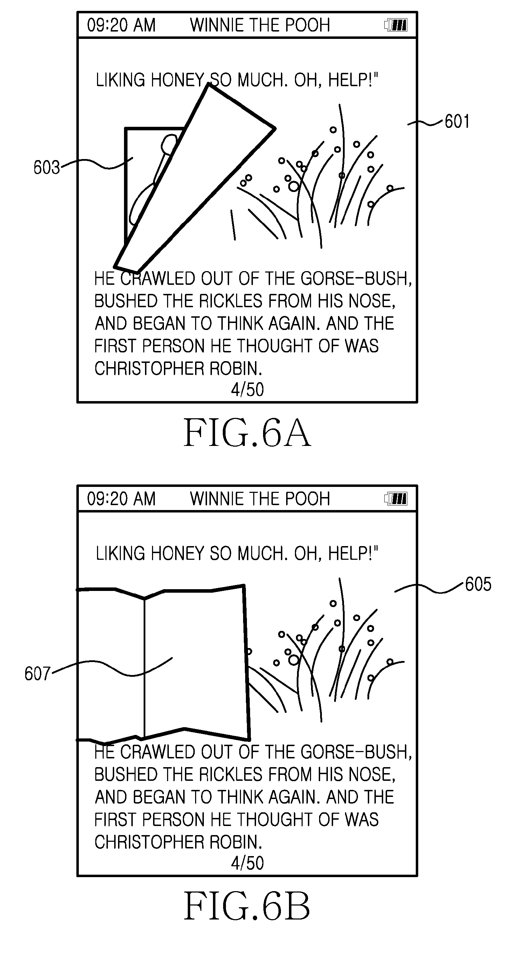

FIGs. 6A-6B are diagrams illustrating a scrap effect of a portable terminal according to an exemplary embodiment of the present invention.

FIG. 6A is a screen applying a notepad effect to a scrap region according to user's setting in a portable terminal according to an exemplary embodiment of the present invention.

Referring to FIG. 6A, the portable terminal is outputting (601) text contents composed of image data and text data, and the portable terminal has applied a notepad effect to a bear character according to a user's scrap request.

Owing to this, in a case where a user intends to scrap the bear character, he can perform (603) a scrap process by tearing away a notepad applied onto the bear character.

At this time, the portable terminal tears away only the notepad without editing a text of the output original, thereby avoiding a copyright problem. However, the drawings are illustrated as if the bear character of the original text was deleted for the sake of fast understanding of a process of tearing off while scrapping a notepad, but the bear character of the original text is not actually deleted. According to another exemplary embodiment, as the bear character is again restored and appears after being deleted, the portable terminal can apply an effect of restoring the original text after applying an effect of deleting the contents of the original text.

In addition, in a case where the portable terminal is to perform a scrap process by a behavior wherein the user tears away the notepad, the portable terminal can provide not only a screen effect of tearing away the notepad but also a sound effect of tearing away the notepad together. In addition, in a case where the user is to perform a simple touch input instead of a behavior, for example, where the user tears away the notepad himself, the portable terminal processes a screen effect as if the notepad is torn off.

FIG. 6B is a screen applying a paper notebook effect to a scrap region according to user's setting in a portable terminal according to an exemplary embodiment of the present invention.

Referring to FIG. 6B, the portable terminal is outputting (605) text contents composed of image data and text data, and the portable terminal has applied a paper notebook effect to a bear character according to a user's scrap request.

Owing to this, in a case where a user intends to scrap the bear character, he can perform (607) a scrap process by tearing away a paper notebook applied onto the bear character.

At this time, the portable terminal tears away only the notebook without editing the output original, thereby avoiding a copyright problem. However, the drawings are illustrated as if the bear character of the original text was deleted for the sake of fast understanding of a process of tearing off while scrapping a notebook, but the bear character of the original text is not actually deleted, as described earlier.

As described above, exemplary embodiments of the present invention are to apply a specific effect to text contents and enhance the utilization of a portable terminal performing an e-book function, and can provide a specific effect to a page background and a scrap region and improve visual and auditory effects over an existing e-book function.

While the invention has been shown and described with reference to certain preferred embodiments thereof, it will be understood by those skilled in the art that various changes in form and details may be made therein without departing from the spirit and scope of the invention as defined by the appended claims and their equivalents.

## Claims

1. An apparatus for providing an electronic book (e-book) function in a portable terminal, the apparatus comprising:
a controller for loading an e-book; and
a scrap processor for applying a specific effect to a partial region of a text of the loaded e-book and, if a user's input to the region to which the specific effect is applied is sensed, for generating the applied effect.

2. The apparatus of claim 1, wherein the scrap processor applies the specific effect to a page background or to a scrap region.

3. The apparatus of claim 1, wherein, after receiving an input of a region intended to apply the specific effect, the scrap processor applies a background effect and a background sound effect to the region.

4. The apparatus of claim 1, wherein the specific effect comprises at least one of a leaf, a notepad, a paper notebook, an old notebook, and a waterdrop effect.

5. The apparatus of claim 3, wherein the region intended to apply the specific effect comprises at least one of an image region and a text region.

6. An apparatus for providing an electronic book (e-book) function in a portable terminal, the apparatus comprising:
an effect application unit for receiving a selection of a region intended to scrap among a text of an e-book and for applying a specific effect to the selected region;
a scrap processor for, in a case of receiving a selection of the applied specific effect, generating the applied effect; and
a memory unit for storing data of the selected region.

7. The apparatus of claim 6, wherein the effect application unit receives a selection of a region intended to scrap using at least one of a touch input and blocking.

8. The apparatus of claim 6, wherein the effect application unit outputs data of a region intended to scrap on the applied effect, and
wherein the data of the region intended to scrap uses at least one of a capture program and a letter recognition program.

9. A method for providing an electronic book (e-book) function in a portable terminal, the method comprising:
loading an e-book;
applying a specific effect to a partial region of a text of the loaded e-book; and
if a user's input to the region to which the specific effect is applied is sensed, generating the applied effect.

10. The method of claim 9, wherein the specific effect is applied to a page background or to a scrap region.

11. The method of claim 9, wherein the applying of the specific effect comprises:
receiving an input of a region intended to apply the specific effect;
determining effect information to apply to the region;
applying a background effect to the region; and
applying a background sound effect to the region.

12. The method of claim 9, wherein the specific effect comprises at least one of a leaf, a notepad, a paper notebook, an old notebook, and a waterdrop effect.

13. The method of claim 11, wherein the region intended to apply the specific effect comprises at least one of an image region and a text region.

14. A method for providing an electronic book (e-book) function in a portable terminal, the method comprising:
receiving a selection of a region intended to scrap among a text of an e-book;
applying a specific effect to the selected region;
in a case of receiving a selection of the applied specific effect, generating the applied effect; and
storing data of the selected region.

15. The method of claim 14, further comprising outputting data of the region intended to scrap onto the applied effect,
wherein the data of the region intended to scrap uses at least one of a capture program and a letter recognition program.
